# EUROPEAN PATENT SPECIFICATION

(11) **EP 2 842 810 B1**
(45) Date of publication and mention of the grant of the patent: **11.05.2016**
(21) Application number: 13182211.6
(22) Date of filing: 29.08.2013
(51) Int. Cl.: B60R 13/02, B60R 5/00

(54) **Cladding part and motor vehicle**
Verkleidungsteil und Kraftfahrzeug
Pièce de revêtement et véhicule à moteur

(43) Date of publication of application: 04.03.2015
(73) Proprietor: Ford Global Technologies, LLC, Dearborn, MI 48126 (US)
(72) Inventor: Yilmaz, Serkan, DEGIRMENDERE GOLCUK/KOCAELI (TR); Çimber, Volkan, SARAYLI/GÖLCÜK/KOCAELI (TR); Durademir, Ayhan, MALTEPE/ISTANBUL (TR); Ozgen, Oguz, 34734 SAHRA-I CEDID KADIKOY/ISTANBUL (TR)
(74) Representative: Drömer, Hans-Carsten

(56) References cited:
- EP-A2- 1 059 206
- DE-A1- 3 636 485
- DE-A1-102008 039 607
- GB-A- 2 310 638
- US-A1- 2003 207 077

## Description

The present invention relates to a cladding part for cladding an internal region of a motor vehicle as well as a motor vehicle comprising said cladding part.

Motor vehicles generally comprise a dashboard in the interior which from the driver's perspective is in front of a windshield. In this case, generally a glove compartment is arranged on the passenger side for stowing smaller objects. It is also usual that units, such as for example a fuse box, are arranged from the driver's perspective behind the dashboard.

Conventional dashboards have only sound-absorbing cladding parts with a very flexible structure on the lower face thereof. If forces act on the conventional cladding parts, said parts do not resist said forces for very long and, for example, do not provide the glove compartment or fuse box with any protection from damage.

The prior art discloses several cladding parts for eliminating these drawbacks. GB 2310638 A provides a shaped interior trim panel according to the preamble of claim 1 made of plastics for a motor vehicle, which, in the installed state, is aligned at least essentially horizontally in the interior, a free space permitting the trim panel to deviate from its normal position adjoining the trim panel on one side, wherein the shape of the trim panel is provided with a convex structure configured such that, in the event of being impacted with a horizontal compressive load running essentially in the longitudinal direction of the vehicle, the trim panel undergoes a controlled elastic and/or plastic deformation in the direction of the adjoining free space.

DE 3636485 A1 shows a ski-holder for motor vehicles, and for cars in particular, which has at least one ski mount, a ski-holding part and if necessary one or more supports, is to be wholly or partly adapted, especially in the region of the ski mount(s) and/or the holding part(s) and any supports which may be present, both as regards size and shape, to the outlines of the loading space which is present in the interior of the motor vehicle or the car in particular, so that it can be arranged in the interior of the vehicle together with the skis to be held and can be fastened, preferably in an easily releasable fashion, onto or into a parcel tray which is already available, for example.

The object of the present invention is to provide an improved cladding part as well as a motor vehicle with said cladding part.

This object is achieved by a cladding part as claimed in claim 1 as well as a motor vehicle as claimed in claim 6. Advantageous developments of the invention are specified in the sub-claims, and described in the description.

The cladding part according to the invention for cladding a lower region of a dashboard of a motor vehicle comprises a damping layer. It is provided that the cladding part has a reinforcing layer at least in partial regions of the damping layer.

Thus the region behind the dashboard is advantageously protected. The units arranged there are not at risk of being damaged when objects exert a force against the cladding part.

According to the invention, the cladding part has at least one shaped portion in the form of a negative shape of a profile.

Thus, positioning the profiles as transported goods is particularly simplified. The profiles are additionally protected against slipping in the transverse direction relative to their longitudinal axis by a positive connection.

Furthermore, the cladding part according to the invention, it is provided that said cladding part additionally comprises a tube arranged in the shaped portion.

The tube in this case serves as a storage container for long, thin items such as rods or pipes. Said items are well protected in the tube when transported.

In an advantageous embodiment of the cladding part according to the invention, the reinforcing layer is made from hard plastic.

This provides the possibility of producing the cladding part relatively easily and cost-effectively. By means of the reinforcing layer made of hard plastic, the reinforcing layer has a high level of stability relative to the weight.

In a further advantageous embodiment of the cladding part according to the invention, the hard plastic is polypropylene, in particular the hard plastic is a polypropylene copolymer, which is mineral-filled with a content of approximately 15%.

This material provides a high level of robustness, a long service life and a high scratch resistance, with relatively low costs in terms of purchase and production.

In an advantageous embodiment, reinforcing ribs are arranged on the reinforcing layer of the cladding part according to the invention.

Said ribs provide the reinforcing layer and thus also the cladding part with additional rigidity, with relatively little extra weight.

Additionally, in a further advantageous embodiment the cladding part according to the invention comprises fixing means in order to fix the transported goods to the cladding part.

Thus, additionally, further improved protection against the slipping of the profiles is provided. The profiles may thus be additionally secured by a non-positive and/or positive connection against slipping in the longitudinal direction. Also rattling noise is prevented thereby.

The cladding part according to the invention is in all embodiments preferably integrated in a motor vehicle, wherein a lower region of a dashboard of the motor vehicle is clad by the cladding part.

Thus a motor vehicle is provided in which the space below the dashboard on the passenger side may be additionally used as storage space. In particular, it is possible to transport long profiles or rods or the like which may reach along the entire length of the motor vehicle as far as the splashboard. Even with smaller vans and/or high-roof combi vans, therefore, relatively long goods may be stowed with a relatively short vehicle length.

An exemplary embodiment of the invention is described in more detail with reference to the drawings and the following description, in which:
- figure 1: shows a cladding part according to the invention,
- figure 2: shows a cladding part according to the invention in an installed position and
- figure 3: shows a motor vehicle according to the invention.

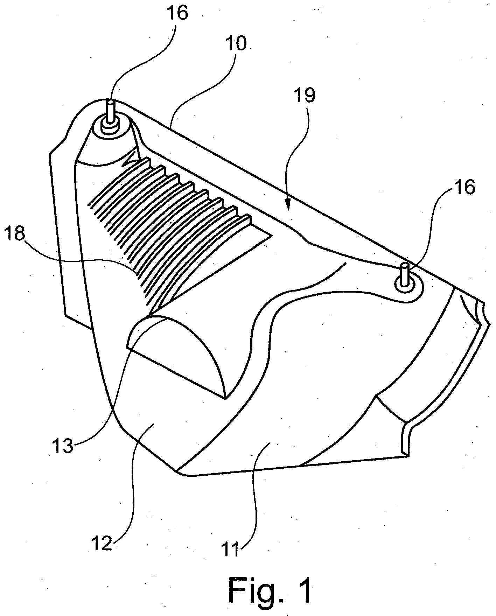

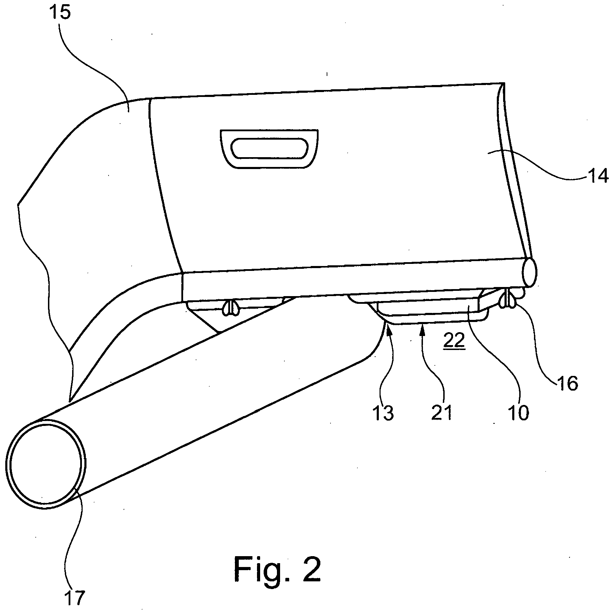

In figure 1, an embodiment of a cladding part 10 according to the invention is shown by way of example in a sketch. The cladding part serves for cladding a lower region 22 of a dashboard 15 of a motor vehicle 20, shown in more detail in figure 2. The contours of the cladding part 10 are in this case formed differently depending on the type of motor vehicle, and adapted to the corresponding surroundings of the dashboard 15 in the motor vehicle 20.

A two-layer cladding part 10 is shown in plan view in figure 1. The cladding part 10 according to the invention comprises a reinforcing layer 12 in addition to a damping layer 11. In figure 1, the upper damping layer 11 in the drawing comprises a section in order to show the lower reinforcing layer 12.

According to the invention, the reinforcing layer 12 is arranged at least in partial regions of the damping layer 11. The cladding part 10 may also have more than two layers 11, 12. The number of layers 11, 12 may vary in different partial regions.

The damping layer 11 consists of sound proofing material, also called NVH (noise, vibration, harshness) material.

The reinforcing layer 12 is made from a hard plastic, in particular a polypropylene copolymer with a 15 per cent mineral filling. The reinforcing layer 10 thus has a high level of stability and scratch resistance. In addition, other materials are conceivable as the material for the reinforcing layer 12. The reinforcing layer 12 may comprise reinforcing ribs 18 for reinforcing the structure thereof.

The cladding part 10 comprises at least one shaped portion 13. The shaped portion 13 serves for receiving a profile and/or a plurality of profiles. The shaped portion is designed in this case such that it corresponds to a negative shape of the profile. The corresponding profile is thus able to be stored positively at least in two directions in the cladding part.

Additionally, the cladding part according to the invention may also comprise fixing means, which additionally fasten the transported goods. To this end, in a simple manner the shaped portion 13 may also have a closed shape forming the entire periphery of the profile, for example a circular hole for circular profiles. In addition, clips or elements provided with a spring force are possible as fixing means.

According to the invention, a plurality of shaped portions 13 may also be present in the cladding part 10. Said shaped portions may have different shapes from one another for different profiles.

Fastening elements 16 are arranged on an upper face 19 of the cladding part. They serve for mounting the cladding part in the motor vehicle 20. The fastening elements 16 are, by way of example, threaded bolts or at least holes therefor. Wing bolts serve, for example, as counter-pieces for the threaded bolts.

The cladding part 10 according to the invention is designed to be permanently fitted in the motor vehicle 20 or to be temporarily fitted according to requirements.

Figure 2 shows by way of example an installed situation of a cladding part 10 according to the invention below a dashboard 15 of the motor vehicle 20. Typically, a glove compartment 14 is arranged in the dashboard 15 on the passenger side.

The cladding part 10 according to the invention is arranged in a lower region 22 of the dashboard 15. In this case, an underside 21 of the cladding part 10 faces the footwell of the passenger side of the motor vehicle 20.

The cladding part 10 according to the invention is preferably fastened by means of fastening elements 16 to a crossmember, not shown, extending behind the dashboard 15. Two threaded bolts and wing nuts are shown as fastening means 16. According to the invention, other fastening elements may also be used in different quantities.

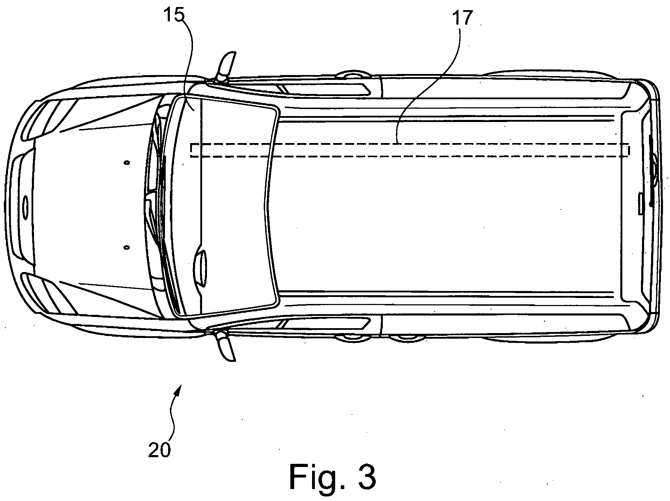

In figure 2 a tube 17 is arranged in the shaped portion 13. Said tube may serve as a storage container for the transported. The tube extends in this case, in particular, through the entire length of the motor vehicle 20, shown in figure 3.

In the version shown in figure 3, the passenger region serves as a storage compartment. The tube 17 extends from a location below the dashboard 15 to the rear end of the motor vehicle 20. A passenger seat is in this case not present or folded up. According to the invention, it is also possible for the tube 17 to extend along a central space between the driver's seat and the passenger seat. In this case, the passenger seat would remain as a seating option for a passenger.

### List of reference numerals

- 10: Cladding part
- 11: Damping layer
- 12: Reinforcing layer
- 13: Shaped portion
- 14: Glove compartment
- 15: Dashboard
- 16: Fastening elements
- 17: Tube
- 18: Reinforcing ribs
- 19: Upper face
- 20: Motor vehicle
- 21: Lower face
- 22: Lower region

## Claims

1. A cladding part (10) for cladding a lower region (22) of a dashboard (15) of a motor vehicle (20), wherein the-cladding part (10) comprises a damping layer (11) and a reinforcing layer (12) at least in partial regions of the damping layer (11), **characterized in that** the cladding part (10) has at least one shaped portion (13) in the form of a negative shape of a profile, wherein the cladding part comprises a tube (17) arranged in the shaped portion (13).

2. The cladding part (10) as claimed in claim 1, wherein the reinforcing layer (12) is made from hard plastic.

3. The cladding part (10) as claimed in claim 2, wherein the hard plastic is polypropylene.

4. The cladding part (10) as claimed in one of claims 1 to 3, wherein reinforcing ribs (18) are arranged on the reinforcing layer (12).

5. The cladding part (10) as claimed in one of claims 1 to 4, wherein the cladding part (10) comprises fixing means in order to fix the transported goods to the cladding part (10).

6. A motor vehicle (20) comprising a cladding part (10) as claimed in one of claims 1 to 5, wherein a lower region (22) of a dashboard (15) of the motor vehicle (20) is clad by the cladding part (10).

## Patentansprüche

1. Verkleidungsteil (10) zur Auskleidung eines unteren Bereichs (22) eines Armaturenbretts (15) eines Kraftfahrzeugs (20), wobei das Verkleidungsteil (10) eine Dämpfungsschicht (11) und zumindest in Teilbereichen der Dämpfungsschicht (11) eine Verstärkungsschicht (12) aufweist, **dadurch gekennzeichnet, dass** das Verkleidungsteil (10) zumindest eine Ausformung (13) in Gestalt einer Negativform eines Profils aufweist, wobei das Verkleidungsteil eine in der Ausformung (13) angeordnete Röhre (17) umfasst.

2. Verkleidungsteil (10) nach Anspruch 1, wobei die Verstärkungsschicht (12) aus Hartkunststoff gefertigt ist.

3. Verkleidungsteil (10) nach Anspruch 2, wobei der Hartkunststoff Polypropylen ist.

4. Verkleidungsteil (10) nach einem der Ansprüche 1 bis 3, wobei an der Verstärkungsschicht (12) Versteifungsrippen (18) angeordnet sind.

5. Verkleidungsteil (10) nach einem der Ansprüche 1 bis 4, wobei das Verkleidungsteil (10) Fixiermittel aufweist, um Transportgüter an dem Verkleidungsteil (10) zu fixieren.

6. Kraftfahrzeug (20) mit einem Verkleidungsteil (10) nach einem der Ansprüche 1 bis 5, wobei mit dem Verkleidungsteil (10) ein unterer Bereich (22) eines Armaturenbretts (15) des Kraftfahrzeugs (20) ausgekleidet ist.

## Revendications

1. Pièce de revêtement (10) pour revêtir une région inférieure (22) d'un tableau de bord (15) d'un véhicule à moteur (20), la pièce de revêtement (10) comprenant une couche d'amortissement (11) et une couche de renforcement (12) au moins dans des régions partielles de la couche d'amortissement (11), **caractérisée en ce que** la pièce de revêtement (10) présente au moins une portion façonnée (13) présentant la forme négative d'un profilé, la pièce de revêtement comprenant un tube (17) agencé dans la portion façonnée (13).

2. Pièce de revêtement (10) selon la revendication 1, dans laquelle la couche de renforcement (12) est fabriquée à partir de plastique dur.

3. Pièce de revêtement (10) selon la revendication 2, dans laquelle le plastique dur est du polypropylène.

4. Pièce de revêtement (10) selon l'une quelconque des revendications 1 à 3, dans laquelle des nervures de renforcement (18) sont agencées sur la couche de renforcement (12).

5. Pièce de revêtement (10) selon l'une quelconque des revendications 1 à 4, dans laquelle la pièce de revêtement (10) comprend des moyens de fixation afin de fixer les produits transportés à la pièce de revêtement (10).

6. Véhicule à moteur (20) comprenant une pièce de revêtement (10) selon l'une quelconque des revendications 1 à 5, dans lequel une région inférieure (22) d'un tableau de bord (15) du véhicule à moteur (20) est revêtue par la pièce de revêtement (10).
